Europäisches Patentamt

(19) European Patent Office

Office européen des brevets

(11) Publication number: **0 005 996**
**B1**

(12) **EUROPEAN PATENT SPECIFICATION**

(45) Date of publication of patent specification: **27.01.82**

(21) Application number: **79300989.5**

(22) Date of filing: **30.05.79**

(51) Int. Cl.³: **G 01 B  7/03,  G 06 F  3/03,**
**G 08 C  21/00**

(54) Improvements in and relating to electrographic apparatus.

(30) Priority: **30.05.78 GB  2369978**

(43) Date of publication of application:
**12.12.79 Bulletin 79/25**

(45) Publication of the grant of the European patent:
**27.01.82 Bulletin 82/4**

(84) Designated Contracting States:
**BE DE FR LU NL**

(56) References cited:
**DE - A - 2 358 584**
**US - A - 3 440 522**
**US - A - 3 925 610**
**US - A - 3 959 585**
**US - A - 4 070 544**

(73) Proprietor: **QUEST AUTOMATION LIMITED**
**Quest House Princes Road Ferndown**
**Dorset BH22 9HQ (GB)**

(72) Inventor: **Lambden, Martin Roy**
**13 Telston Close**
**Bourne End Buckinghamshire (GB)**

(74) Representative: **Cole, Paul Gilbert et al,**
**HUGHES CLARK ANDREWS & BYRNE 5 Stone**
**Buildings Lincoln's Inn**
**London, WC2A 3XT (GB)**

Courier Press, Leamington Spa, England.

Improvements in and relating to electrographic apparatus

This invention is concerned with transducer pads for electrographic apparatus arranged to provide electrical signals representing the co-ordinates of a location at which pressure is applied locally to a writing surface of the pad by the action, for example, of a stylus or writing implement. Such apparatus can be arranged to provide substantially continuous electrical monitoring of the position of a writing implement during writing or drawing on a document resting on the writing surface of a transducer pad and the resulting electrical signals can be used for example to provide simultaneous reproduction of the writing or drawing at a distance.

A known type of transducer device comprises a flexible membrane mounted parallel to a fixed base, the opposing surfaces of the membrane and the base being each coated with a resistive film. Excitation voltages are applied to the resistive films at an angle to one another, usually 90 degrees, through conducting strips so that when pressure is applied to the membrane by a stylus or the like, two analog electrical voltages related unambiguously to the position of the stylus are obtained.

US Patent Specification No. 3440522 (Kruse, assigned to Litton Systems Inc.) describes a device for sensing electrical signals which correspond to the location in a co-ordinate system of points forming visual, cursive or graphic symbols. In that device a transparent circular deformable conductive membrane is bonded between an insulating retainer ring and a spacer ring and a surface of the membrane having a conductive coating is positioned over an opposing spaced conductive glass. Upon application of pressure to a point on the membrane it contacts any one of a plurality of points on the opposing glass surface and receives voltages representing the location in a co-ordinate system of the point of contact. But the retainer and spacer ring are constructed in fibreglass or other relatively rigid material and there is no way of adjusting the tension in the membrane once it has been bonded between the retainer and spacer rings to ensure that the membrane is uniformly tensioned.

US Patent Specification No. 3959585 (Mattes and Torock, assigned to Bell Telephone Laboratories Incorporated) describes a graphical input terminal having a first resistive layer laminated onto a board and a second resistive layer formed on a polyester sheet which is maintained in closely spaced relationship to the first layer with an air gap between them. The periphery of the polyester sheet extends beyond the periphery of the first resistive layer and is held in place by fixing strips bolted in position. The air gap is defined by a plastics spacing strip or "nib" and the appropriate membrane tension is maintained by neoprene tubing. But such a construction of membrane is cumbersome and does not permit simple and rapid replacement of the membrane as a unit.

In the inventor's earlier US Patent Specification No. 4070544 (assigned to the applicants herein) there is described electrographic apparatus in which data related to movement of a pen or stylus over a sheet can be coded for computer processing, a membrane having a conductive surface being deformable to contact a backing member also having a conductive surface. The membrane is a rectangular sheet of plastics material provided with side and end extensions stiffened at their extremities with metal stiffening bars. To achieve satisfactory results the force to be applied at a point on the surface of the membrane to cause the membrane to contact the backing member should be substantially the same for all points in the working area of the membrane and therefore the upper surface of the membrane is concave and the membrane is uniformly tensioned by an arrangement of stressed springs. But the approach taken in that earlier patent specification was cumbersome and did not permit ready or easy replacement of the flexible membrane when such replacement was necessary.

It is an object of the invention to provide a membrane and frame which is an integrated or unitary structure which can be mounted in place or removed from electrographic apparatus as a unit, and in which the desired tension in the membrane is provided by the frame itself.

The invention provides an electrographic apparatus of the type comprising a transducer pad for providing electrical signals representing the co-ordinates of a location at which pressure is applied locally to a writing surface of the pad by a pen or stylus, the transducer pad including a base member having a conductive surface to which a voltage is applied, a frame member adapted to be mounted on said base member, a flexible membrane securely mounted on said frame member, said flexible membrane being spaced from said base member and having a conductive surface adapted to make electrical contact with a conductive surface of the base member when a pen or stylus is applied to said flexible membrane, and means for applying voltage to the said conductive surface of said flexible membrane, characterised in that said frame member is flexible and comprises four sides each of which is prestressed inwardly during the securing of said flexible membrane thereto and each of which increases in cross-section from its ends to its center so as to cause said four sides to produce uniform tensile force in said flexible membrane secured thereto.

The membrane may be secured to the frame by adhesive which should be compatible as to its characteristics with the material of the membrane. The side members of the frame may increase in width from each end to the centre so that a substantially uniform stress is applied to the membrane. The width of the material at the corners of the frame may be reduced to increase the resilience of the frame. Membranes forming the top and bottom surfaces respectively may be secured as by glueing to a frame, of which the sides are forced outwardly so that an easily replaceable unit for the transducer is provided. The side members of the frame may taper outwardly in cross-section so that the edges of the two membranes may be brought together and secured by adhesive.

Other parts of the invention are embodied in the preferred forms which will now be described in some detail, with reference to the accompanying drawings, in which:

Figure 1 is a perspective view partly in section of one form of transducer according to the invention;

Figure 2 is a plan view of a frame used in the form of Figure 1;

Figure 3 is a perspective view of a unit embodying two resistive surfaces;

Figure 4 is a section on the line IV—IV of Figure 3 to an enlarged scale.

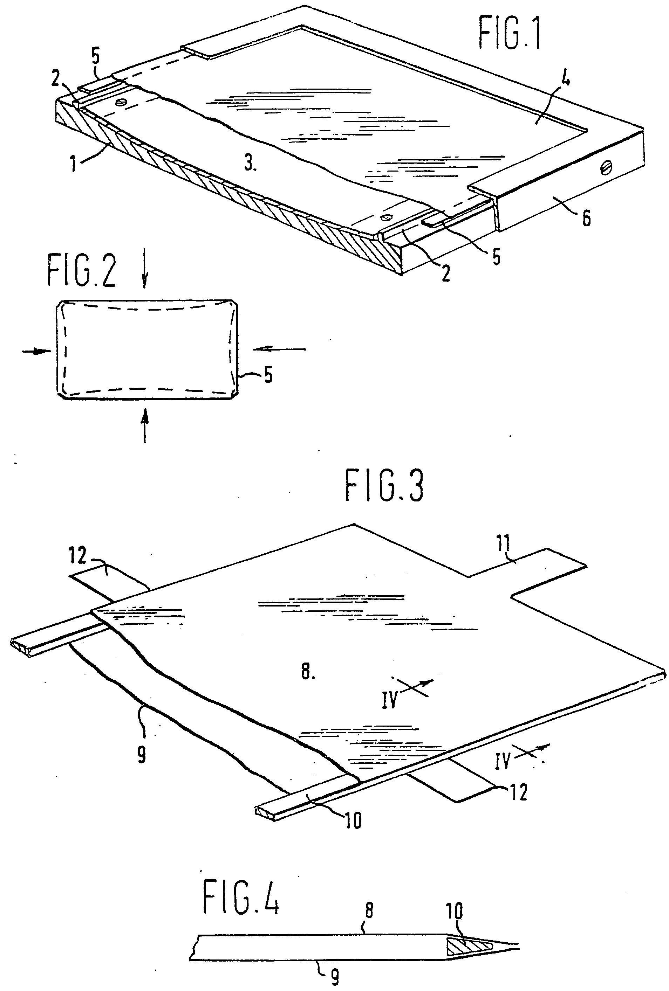

As shown in Figure 1, a transducer pad comprises a base 1 having an upstanding rectangular nib 2 parallel to its four edges. The top surface of the base 1 is slightly concave and carries a resistive surface 3 (the Y surface) which, as shown, comprises a membrane secured to the base by screws. A membrane 4 having a resistive under surface (the X surface) is stretched across the nib 2 so as to be spaced from the resistive surface 3. Means (not shown) are provided to supply excitation voltages to the X and Y surfaces at right angles to one another so that when the two surfaces are brought into contact at any point, two analog electrical voltages are produced related unambiguously to the location of that point.

The membrane 4 is secured by adhesive to a resilient frame 5. Before application of the membrane, the frame 5 is compressed inwardly from each side as indicated by the arrows in Figure 2. The membrane 4 is then glued to the frame by means of a compatible adhesive and the frame and membrane held between two plates until the adhesive is set. The surfaces of these plates are coated with polytetrafluoroethylene to prevent sticking of the plates to the membrane. A suitable adhesive is a modified polyester resin sold by G. T. Sheldahl Limited, Eastern Road, Bracknell, under the designation "Schjel-bond adhesive".

When the adhesive has set, the plates are removed and the compressive stress on the frame is removed. The frame then expands and exerts tensile forces on the membrane to produce a uniformly taut surface.

The sides of the frame are shaped to provide for uniform stress on the membrane. The width of the frame sides increases inwardly from each end to the centre in a manner which can be determined by the conventional loaded-beam theory. To increase the resilience of the frame, the corners may be recessed to reduce the width of material there.

The frame 5 is placed on the base 1 outside the nibs 2 and is secured by a cover 6. The membrane 4 presses on the rectangular nib 2 which determines the clearance between the X and Y surfaces. A slight difference in height between the underside of the cover 6 and the tip of the nib 2 provides additional tension to the diaphragm and ensures its flatness.

In the form shown in Figure 3, two membranes 8, 9 having resistive surfaces are glued to opposite sides of the rectangular spring frame 10 with their resistive surfaces opposite to one another. Silver connection strips 11, 12 are provided on opposite sides of membranes 8, 9 respectively. In manufacture, the spring frame 10 is stressed before the membranes are attached so that when released the frame expands and tautens the two membranes.

The cross-section of the frame 10 is such as to provide the desired separation of the X and Y surfaces while, at the same time, being of low torsional rigidity and strength for low, even tensioning of the surfaces. The cross-section of the frame is preferably trapezoidal, tapering towards the outside, so that the edges of the membranes can be brought close to one another for glueing together.

It will be understood that the invention is not restricted to the details of the preferred forms described by way of example, which may be modified without departure from the scope of the accompanying claims.

**Claims**

1. An electrographic apparatus of the type comprising a transducer pad for providing electrical signals representing the coordinates of a location at which pressure is applied locally to a writing surface of the pad by a pen or stylus, the transducer pad including a base member (1) having a conductive surface (3) to which a voltage is applied, a frame member (5) adapted to be mounted on said base member, a flexible membrane (4) securely mounted on said frame member, said flexible membrane (4) being spaced from said base member (1) and having a conductive surface adapted to make electrical contact with the conductive surface of the base member when a pen or stylus is applied to said flexible membrane, and means for applying voltage to the said conductive surface of said flexible membrane, characterised in that said frame member (5) is flexible and comprises four sides each of which is prestressed inwardly during the securing of said flexible membrane thereto and each of which increases in cross-section from its ends to its center so as to cause said four sides to produce uniform tensile force in said flexible membrane secured thereto.

2. Electrographic apparatus according to Claim 1, wherein the sides of said frame member are recessed at their ends.

3. Electrographic apparatus according to Claim 1 or 2, in which the conductive surface (9) of said base member comprises a second flexible membrane secured to said flexible frame member (10) in spaced relation to said first-mentioned flexible member (8) such that said flexible frame member (10) produces uniform tensile force in both of said flexible membranes (8, 9).

4. Electrographic apparatus according to Claim 3, in which each of said sides of said frame member 10 is trapezoidal in cross-section, said sides being so oriented that the narrower edges of said sides form the outer edges of said frame member.

5. Electrographic apparatus according to Claim 1 or 2, including rectangular upstanding nib means (2) mounted on said base member around said conductive surface of said base member and bearing against said flexible membrane (4) to urge it away from said conductive surface (3) of said base member.

**Revendications**

1. Appareil électrographique du type comprenant un tampon transducteur destiné à produire des signaux électriques représentant les coordonnées d'un endroit où une pression est exercée localement sur une surface d'écriture du tampon par une plume ou un style, le tampon transducteur comprenant un élément de base (1) présentant une surface conductrice (3) à laquelle une tension est appliquée, un cadre (5) propre à être monté sur l'élément de base, une membrane flexible (4) solidement montée sur le cadre, la membrane flexible (4) étant espacée de l'élément de base (1) et présentant une surface conductrice propre à établir un contact électrique avec la surface conductrice de l'élément de base lorsqu'une plume ou un style est appliqué sur la membrane flexible, et un dispositif pour appliquer une tension à la surface conductrice de la membrane flexible, caractérisé en ce que le cadre (5) est flexible et comprend quatre côtés qui sont chacun précontraints vers l'intérieur pendant que la membrane flexible y est fixée, et qui augmentent chacun de section à partir de leurs extrémités vers leur milieu, de manière à amener les quatre côtés à produire une force de traction uniforme dans la membrane flexible qui y est fixée.

2. Appareil électrographique suivant la revendication 1, caractérisé en ce que les côtés du cadre sont évidés à leurs extrémités.

3. Appareil électrographique suivant la revendication 1 ou 2, caractérisé en ce que la surface conductrice (9) de l'élément de base comprend une deuxième membrane flexible fixée au cadre flexible (10) à une certaine distance du premier élément flexible (8), de telle sorte que le cadre flexible (10) produise une force de traction uniforme dans les deux membranes flexibles (8, 9).

4. Appareil électrographique suivant la revendication 3, caractérisé en ce que chacun des côtés du cadre (10) est de section trapézoidale, ces côtés étant orientés de manière que les bords plus étroits des côtés forment les bords extérieurs du cadre.

5. Appareil électrographique suivant la revendication 1 ou 2, caractérisé en ce qu'il comprend une nervure verticale (2) montée sur la base autour de la surface conductrice de cette base et portant contre la membrane flexible (4) pour l'écarter de la surface conductrice (3) de la base.

**Ansprüche**

1. Elektro-grafische Vorrichtung mit einem Übertragungspolster zur Leiferung von elektrischen Signalen, die die Lagekoordinaten darstellen, an welchen lokal Druck von einer Schreibfeder oder einem Stift auf eine Schreibfläche des Polsters ausgebt wird, wobei das Übertragungspolster ein Basisteil (1) mit einer leitenden Oberfläche (3), an der eine Spannung angelegt wird, ein Rahmenteil (5), welches zur Anbringung an dem Basisteil angepaßt ist, eine flexible Membran (4), die fest an dem Rahmenteil befestigt ist, wobei die flexible Membran (4) im Abstand von dem Basisteil (11) angeordnet ist und eine leitende Oberfläche aufweist, die in der Lage ist, einen elektrischen Kontakt mit der leitenden Oberfläche des Basisteiles herzustellen, wenn eine Feder oder ein Stift an der flexiblem Membran angesetzt ist, und Mittel zur Anlage der Spannung an der leitenden Oberfläche der flexiblen Membran umfaßt, dadurch gekennzeichnet, daß das Rahmentil (5) flexibel ist und vier Seiten aufweist, von denen jede während der Befestigung der flexiblen Membran an diesem nach innen vorgespannt ist und von denen jede in Querschnitt von seinen Enden zur Mitte hin anwächst, damit die vier Seiten ine gleichmäßige Spannkraft in der daran befestigten flexiblen Membrane bewirken.

2. Elektro-grafische Vorrichtung nach Anspruch 1, bei welcher die Seiten der Rahmenteile an ihren Enden ausgenommen sind.

3. Elektro-grafische Vorrichtung nach Anspruch 1 oder 2, bei der die leitende Oberfläche (9) des Basisteiles eine zweite flexible Membran aufweist, die an dem flexiblen Rahmenteil (10) in Abstand zu dem erstgenannten flexiblen Teil (8) befestigt ist, derart, daß das flexible Rahmenteil (10) eine gleichmäßige Spannkraft in beiden flexiblen Membranen (8, 9) hervorruft.

4. Elektro-grafische Vorrichtung nach Anspruch 3, in der jede der Seiten des Rahmenteiles (10) querschnittlich trapezoid ausgebildet ist, wobei die Seiten so orientiert sind, daß die kürzeren Kanten der Seiten die äußeren Ränder des Rahmenteiles bilden.

5. Elektro-grafische Vorrichtung nach Anspruch 1 oder 2 mit rechtwinklig nach oben stehenden Spitzenmitteln (2), welche rund um die leitende Oberfläche des Basisteiles auf dem Basisteil montiert sind und sich gegen die flexible Membran (4) anlegen, um sie von der leitenden Oberfläche (3) des Basisteiles entfernt zu halten.

FIG.1

FIG.2 ↓

FIG.3

FIG.4